# EUROPÄISCHE PATENTSCHRIFT

(11) **EP 1 560 736 B1**
(45) Veröffentlichungstag und Bekanntmachung des Hinweises auf die Patenterteilung: **06.12.2006**
(21) Anmeldenummer: 03769392.6
(22) Anmeldetag: 15.10.2003
(51) Int. Cl.: B60T 7/12

(54) **VERFAHREN UND VORRICHTUNG ZUR ANSTEUERUNG WENIGSTENS EINER RADBREMSEINRICHTUNG EINES FAHRZEUGS**
METHOD AND DEVICE FOR CONTROLLING AT LEAST ONE WHEEL-BRAKE UNIT OF A VEHICLE
PROCEDE ET DISPOSITIF POUR COMMANDER AU MOINS UN SYSTEME DE FREINAGE DE ROUE D'UN VEHICULE

(30) Priorität: 09.11.2002 DE 10252147; 15.02.2003 DE 10306362
(43) Veröffentlichungstag der Anmeldung: 10.08.2005
(73) Patentinhaber: DaimlerChrysler AG, 70567 Stuttgart (DE)
(72) Erfinder: BRAEUER, Karsten, 21279 Hollenstedt (DE); SCHOPPER, Michael, 70192 Stuttgart (DE); TONDELLI, Davide, 73732 Esslingen (DE)
(86) Internationale Anmeldenummer: PCT/EP2003/011402
(87) Internationale Veröffentlichungsnummer: WO 2004/043752

(56) Entgegenhaltungen:
- EP-A- 0 251 156
- EP-A- 1 225 110
- WO-A-20/04039646
- DE-A- 2 911 372
- DE-A- 10 041 444
- DE-A- 10 063 061
- DE-A- 19 950 162
- DE-C- 19 849 494

## Beschreibung

Die Erfindung betrifft ein Verfahren und eine Vorrichtung zur Ansteuerung wenigstens einer Radbremseinrichtung eines Fahrzeugs zur Vermeidung eines unbeabsichtigten Wegrollens beim Anfahren am Berg mit Fahrtrichtung bergauf nach dem Oberbegriff des Patentanspruches 1 bzw. des Patentanspruches 8.

Ein derartiges Verfahren bzw. eine derartige Vorrichtung ist beispielsweise aus der DE 100 41 444 A1 bekannt. Bei Erkennung des Anfahrwunsches wird der Bremsdruck abgebaut, wobei der Anfahrwunsch unter anderem auf Basis von Betriebsgrößen wie Motordrehmoment und/oder Motordrehzahl erkannt werden kann.

Es ist die Aufgabe der vorliegenden Erfindung ein Verfahren der eingangs genannten Art und eine Vorrichtung zur Durchführung dieses Verfahrens mit Vermeidung von fehlerhaften Anfahrvorgangserkennungen zu schaffen.

Diese Aufgabe wird gemäß der Merkmale des Patentanspruches 1 bzw. des Patentanspruches 8 gelöst.

Der Anfahrhilfemodus wird automatisch aktiviert, wenn entweder das Fahrzeug an einer Steigung stillsteht und die vom Fahrer gewünschte, vorgesehene Anfahrrichtung des Fahrzeugs in Richtung bergauf festgestellt wurde oder wenn das Fahrzeug aus dem Stillstand entgegen der vorgesehenen Anfahrrichtung zu rollen beginnt.

Im Anfahrhilfemodus verläuft der Bremsdruck entsprechend einem vorgegebenen Verlauf und/oder in Abhängigkeit von vorgebbaren Bedingungen, wobei dem Fahrer dadurch eine Unterstützung beim Anfahren an der Steigung gegeben wird. Gleichzeitig besteht die Möglichkeit ein vom Fahrer gewünschtes Zurückrollen des Fahrzeugs an der Steigung zuzulassen, so dass Rangier- und/oder Parkmanöver an der Steigung erleichtert werden.

Ist der Anfahrhilfemodus aktiv, wird der Bremsdruck in der wenigstens einen Radbremseinrichtung nicht entsprechend der Bremspedalstellung abgebaut, sondern nach einem vorgegebenen Ablauf.

Der zum Zeitpunkt des Einschaltens des Anfahrhilfemodus' durch die Bremspedalstellung vorgegebene Haltebremsdruck bleibt für eine vorgegebene Verzögerungsdauer nach der vollständigen Zurücknahme des Bremspedals aufrechterhalten, solange kein Anfahrwunsch des Fahrers erkannt wurde. Innerhalb der Verzögerungsdauer verbleibt dem Fahrer ausreichend Zeit vom Bremspedal auf das Fahrpedal zu wechseln und den Anfahrvorgang einzuleiten ohne dass das Fahrzeug entgegen der gewünschten Anfahrrichtung zurückrollen kann.

Während der Übergangsphase zwischen Leerlauf und vollständig eingeschlosseriem Lastmoment (z.B. bei vollständig geschlossener Reibungskupplung bei Schaltgetrieben) haben Motordrehzahl bzw. Motormoment einen charakteristischen Verlauf, aus dem ein Anfahrwunsch erkannt werden kann. Die Werte der aktuellen Motordrehzahl und des aktuellen Motormoments sind bei heutigen Fahrzeugen auf dem Fahrzeugbus (z.B. CAN-Bus) verfügbar, so dass die Erkennung des Anfahrvorgangs ohne zusätzliche Sensorik auf einfache Weise erfolgen kann.

Der Anfahrwunsch kann dabei dadurch erkannt werden, dass die zeitliche Ableitung des Motormoments größer oder gleich einem vorgebbaren Motormomentänderungsschwellenwert ist und gleichzeitig die zeitliche Ableitung der Motordrehzahl kleiner oder gleich einem vorgebbaren negativen Motordrehzahländerungsschwellenwert ist. Der Anfahrwunsch wird dadurch besonders sicher erkannt und ein unbeabsichtigtes Zurückrollen auch bei starken Steigungen aufgrund eines zu geringen Motormomentes wird verhindert.

Vorteilhafte Ausgestaltungen des erfindungsgemäßen Verfahrens bzw. der erfindungsgemäßen Vorrichtung ergeben sich aus den abhängigen Patentansprüchen.

Zweckmäßigerweise werden die Werte des Motormoments (M) und/oder der Motordrehzahl (N) vor der zeitlichen Ableitung insbesondere mittels des polynomialen Moving-Average-Verfahrens vorgefiltert, wodurch große Fehler bei den Werten der jeweiligen zeitlichen Ableitung vermieden werden können.

Weiterhin ist es vorteilhaft, wenn nach Ablauf der Verzögerungsdauer der Haltebremsdruck selbsttätig auf einen Kriechbremsdruck reduziert wird. Dieser Kriechbremsdruck kann dabei derart gesteuert oder geregelt werden, dass das Fahrzeug mit einer vorgebbaren Kriechgeschwindigkeit bergab rollt. Alternativ hierzu besteht auch die Möglichkeit den Kriechbremsdruck um eine vorgebbare Druckdifferenz niedriger als den Haltebremsdruck einzustellen, wobei die Druckdifferenz abhängig von der aktuellen Steigung der Straße bestimmt werden kann.

Der Kriechbremsdruck kann auch dann automatisch eingesteuert oder eingeregelt werden, wenn das Fahrzeug aus dem Stillstand entgegen der vorgesehenen Anfahrrichtung zu rollen beginnt.

Auf einfache Art und Weise kann die vorgesehene Anfahrrichtung anhand der vom Fahrer eingelegten Gangstufe ermittelt werden.
Zusammen mit dem Wert eines Neigungssensors zur Bestimmung der Steigung kann dann erkannt werden, ob der Fahrer bergauf anfahren will oder nicht.

Das erfindungsgemäße Verfahren bzw. die erfindungsgemäße Vorrichtung werden im folgenden anhand der beigefügten Zeichnung näher erläutert. Es zeigen:
- Fig. 1: ein Ausführungsbeispiel einer erfindungsgemäßen Vorrichtung in schematischer Darstellung,
- Fig. 2: ein Flussdiagramm eines Ausführungsbeispiels des erfindungsgemäßen Verfahrens und
- Fig. 3: einen beispielhaften Verlauf des Bremslichtsignals, der Fahrzeuggeschwindigkeit, der Steigung der Straße, des Bremsdrucks in einer Radbremseinrichtung und die zeitliche Ableitung des Motormomentes und der Motordrehzahl in Abhängigkeit von der Zeit.

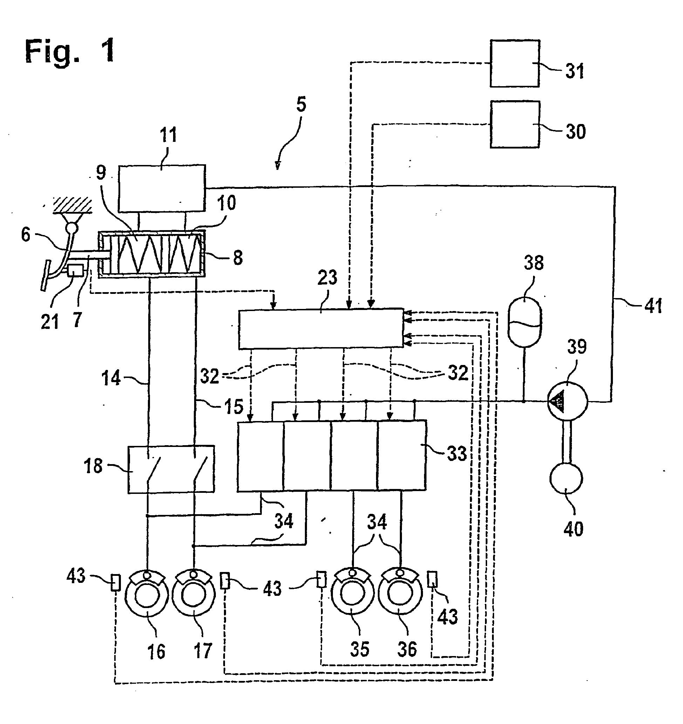

Fig. 1 zeigt eine Bremsvorrichtung 5, die als elektrohydraulische Bremsvorrichtung ausgebildet ist. Ein Bremspedal 6 ist über ein Bremspedalgestänge 7 in an sich bekannter Weise mit einem Tandem-Hauptbremszylinder 8 verbunden. Der Tandem-Hauptbremszylinder 8 hat zwei fluidisch getrennte Arbeitskammern 9, 10, denen jeweils Bremsflüssigkeit aus einem Vorratsbehälter 11 zugeführt wird.

Die beiden Arbeitskammern 9, 10 können über jeweils eine Notbremsleitung 14, 15 direkt mit den beiden Radbremseinrichtungen 16, 17 der Vorderachse fluidisch verbunden werden. Diese fluidische Verbindung erfolgt dann, wenn eine in die Notbremsleitungen 14, 15 eingesetzte Ventilanordnung 18 in ihre Notschaltstellung umgeschaltet wird und die betreffenden fluidischen Verbindungen freigibt. Die Ventilanordnung 18 wird dann in ihre Notschaltstellung umgeschaltet, wenn in der elektrischen Steuerung bzw. Regelung der elektrohydraulischen Bremsvorrichtung 5 ein Defekt auftritt.

Ein Bremslichtschalter 21 ist in bekannter Weise vorgesehen und erzeugt ein Bremslichtsignal BLS das bei betätigtem Bremspedal den Wert Eins ("HIGH") einnimmt und ansonsten bei unbetätigtem Bremspedal den Wert Null ("LOW") aufweist. Das Bremslichtsignal BLS wird an eine Steuereinrichtung 23 übermittelt.

Alternativ zum Bremslichtschalter 21 kann das Bremslichtsignal BLS auch durch Signale anderer Fahrzeugeinrichtungen generiert werden. Beispielsweise mittels Pedalwegsensorsignalen und/oder Hauptbremszylinder-Bremsdrucksignalen, also allen Signalen, aus denen eine Bremspedalbetätigung bestimmbar ist.

Es sei an dieser Stelle darauf hingewiesen, dass zur besseren Unterscheidbarkeit die elektrischen Leitungen in Fig. 1 gestrichelt dargestellt sind, während die fluidischen Leitungen durchgezogen gezeichnet sind.

Bei der bevorzugten Ausführungsform gemäß Fig. 1 ist des weiteren ein Neigungssensor 30 vorgesehen, der die Fahrbahnneigung in Längsrichtung des Fahrzeugs misst und mittels einer elektrischen Signalleitung an die Steuereinrichtung 23 übermittelt. Ein Motorsteuergerät 31 übermittelt der Steuereinrichtung 23 des Weiteren die Werte der aktuellen Motordrehzahl N und das aktuelle Motormoment M, das im Motorsteuergerät 31 anhand eines an sich bekannten Schätzverfahrens bestimmt wird.

Die Steuereinrichtung 23 steuert über vier Steuerleitungen 32 eine Bremsdruckmodulationseinheit 33 an. Fluidisch ist die Bremsdruckmodulationseinheit 33 über jeweils eine Bremsleitung 34 mit den Radbremseinrichtungen 16, 17, 35, 36 verbunden, so dass der Bremsdruck in jeder Radbremseinrichtung 16, 17, 35, 36 radindividuell einstellbar ist. Eingangsseitig wird der Bremsdruckmodulationseinheit 33 unter hohem Druck stehende Bremsflüssigkeit aus einem Hochdruckspeicher 38 zugeführt. Der Hochdruckspeicher 38 und die Eingangsseite der Bremsdruckmodulationseinheit 33 sind mit der Ausgangsseite einer Pumpe 39 verbunden, die von einem Elektromotor 40 angetrieben wird und den Hochdruckspeicher 38 bzw. die Bremsdruckmodulationseinheit 33 mit unter Druck stehender Bremsflüssigkeit versorgt. Die Saugseite der Pumpe 39 ist fluidisch über eine Versorgungsleitung 41 mit dem Vorratsbehälter 11 verbunden.

Die Bremsvorrichtung 5 weist eine automatische Stillstandserkennung auf. Hierfür werden dem Steuergerät 23 die von einem Raddrehzahlsensor 43 gemessenen Raddrehzahlsignale wenigstens eines Rades über eine elektrische Leitung zugeführt. Beim bevorzugten Ausführungsbeispiel nach Fig. 1 werden die Raddrehzahlsignale aller Räder über jeweils einen Raddrehzahlsensor 43 gemessen und an die Steuereinrichtung 23 weitergeleitet. Aus den Raddrehzahlsignalen kann in an sich bekannter Weise der Stillstand des Fahrzeugs erkannt werden, was eine Voraussetzung für die Aktivierung des Anfahrhilfemodus ist.

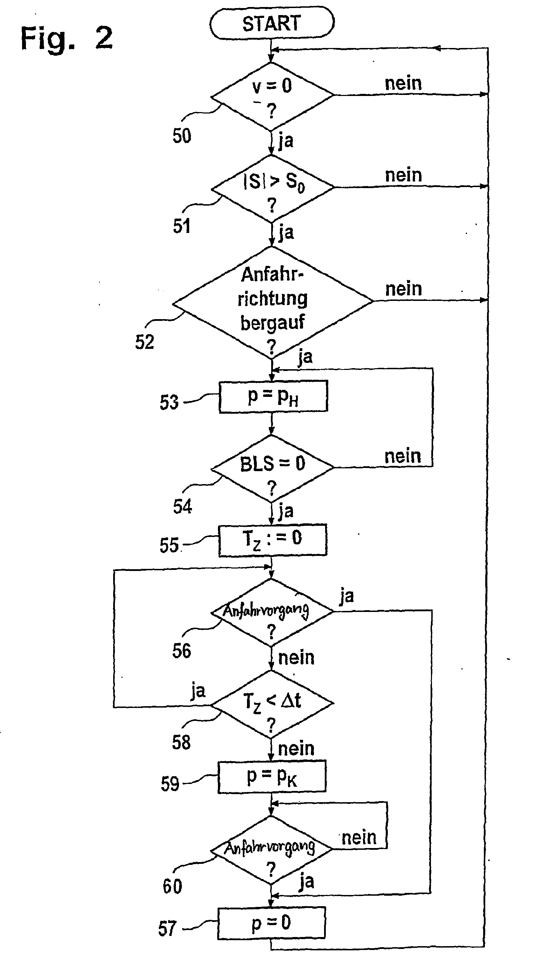

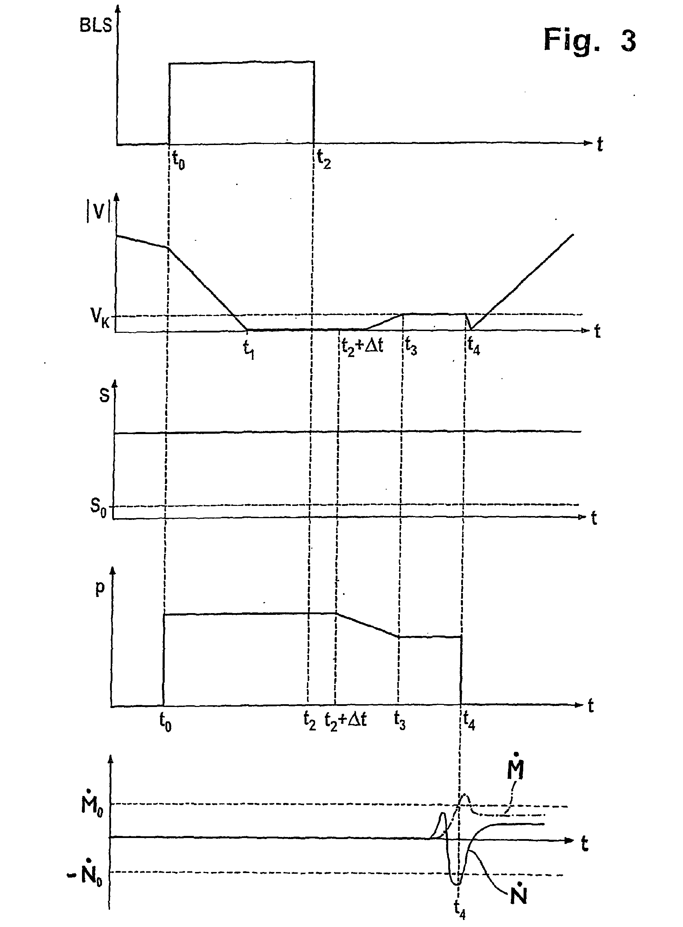

Anhand der Figuren 2 und 3 wird der Verfahrensablauf im einzelnen erläutert.

Fig. 2 zeigt ein Flussdiagramm einer bevorzugten Ausführungsform des erfindungsgemäßen Verfahrens. Nach dem Start wird im Schritt 50 zunächst abgefragt, ob sich das Fahrzeug im Stillstand befindet, als die Fahrzeuggeschwindigkeit v gleich Null ist. Ist dies nicht der Fall, wird diese Abfrage zyklisch wiederholt.

Wurde im Schritt 50 der Fahrzeugstillstand erkannt wird im darauffolgenden Schritt 51 geprüft, ob das Fahrzeug an einer Steigung steht. Hierfür wird das Steigungswert s des Neigungssensors 30 betragsmäßig mit einem Steigungsschwellenwert s₀ verglichen. Überschreitet der Betrag der aktuellen Steigung den Steigungsschwellenwert S₀, dann wird daraus geschlossen, dass das Fahrzeug an einer Steigung steht. Der Steigungsschwellenwert S₀ ist grundsätzlich beliebig vorgebbar und beim Ausführungsbeispiel nur geringfügig größer als Null. Alternativ kann er auch gleich Null gewählt werden.

Wurde eine Steigung (s≥s₀) erkannt, wird das Verfahren wird mit Schritt 52 fortgesetzt. Andernfalls wird zu Schritt 50 zurückgesprungen.

In Schritt 52 wird überprüft, ob die vom Fahrer gewünschte, vorgesehene Anfahrrichtung in Richtung bergauf oder bergab gewählt wurde. Die vom Fahrer vorgesehene Anfahrrichtung wird beispielsgemäß aus der vom Fahrer eingelegten Gangstufe ermittelt, die beispielsweise mittels einem nicht näher dargestellten Sensor erfasst werden kann. Aus dem Steigungswert des Neigungssensors 30 kann dann ermittelt werden, ob die vorgesehene Anfahrrichtung einem Anfahren in Richtung bergauf oder bergab entspricht. Ist der Leerlauf oder die Neutralstellung gewählt, so wird von einer Anfahrrichtung bergauf ausgegangen und bei Vorliegen der anderen notwendigen n Bedingungen der Anfahrhilfemodus aktiviert.

Entspricht die gewünschte Anfahrrichtung einem Anfahren in Richtung bergauf wird im Schritt 53 der aktuelle Bremsdruck p in den Radbramseinrichtungen 16, 17, 35, 36 eingeschlossen und somit gehalten. Dies kann beispielsweise mit Hilfe der Ein- und Auslassventile eines ABS-Systems erfolgen, die hier nicht dargestellt sind. Der nunmehr eingestellte Bremsdruck p sei als Haltebremsdruck p_{H} bezeichnet.

Alternativ, wenn die Anfahrrichtung nicht der Richtung bergauf entspricht, wird zu Schritt 50 zurückgesprungen.

Im Anschluss an den Schritt 53 wird abgefragt, ob das Bremslichtsignal BLS den Wert Null aufweist (Schritt 54). Wenn dies nicht der Fall ist, werden die Schritte 53 und 54 wiederholt und der Haltebremsdruck p_{H} in den Radbremseinrichtungen 16, 17, 35, 36 bleibt unverändert.

Sobald der Fahrer das Bremspedal vollständig in seine Ruhestellung zurücknimmt (BLS=0), wird der Haltebremsdruck pH noch für eine vorgebbare Verzögerungsdauer Δt aufrechterhalten und dann reduziert. Dazu wird zunächst im Schritt 55 ein Zeitzähler T_{z} auf Null gesetzt und anschließend abgefragt, ob ein Anfahrvorgang vorliegt (Schritt 56).

Während der Übergangsphase zwischen Leerlauf und vollständig eingeschlossenem Lastmoment (z.B. bei vollständig geschlossener Reibungskupplung bei Schaltgetrieben) haben Motordrehzahl bzw. Motormoment einen charakteristischen Verlauf, aus dem ein Anfahrvorgang erkannt werden kann. Beim Anfahren mit einem Fahrzeug mit Reibungskupplung und Schaltgetriebe gibt der Fahrer zunächst Gas, so dass die Motordrehzahl N ansteigt. Unmittelbar anschließend beginnt der Fahrer die Kupplung zu schließen, um die Motordrehzahl N und Antriebswellendrehzahl langsam aneinander anzupassen. Dabei sinkt die Motordrehzahl N und das Motormoment M steigt an. Auf einen Anfahrvorgang wird geschlossen, wenn die zeitliche Ableitung *Ṁ* des Motormomentes M des Fahrzeugs größer oder gleich einem vorgegebenen positiven Motormomentänderungsschwelleriwert *Ṁ*₀ ist und gleichzeitig die zeitliche Ableitung *Ṅ*der Motordrehzahl N gleich oder kleiner ist als ein vorgegebener negativer Motordrehzahländerungsschwellenwert *Ṅ*₀. Ist dies der Fall wird der Bremsdruck p in den Radbremseinrichtungen 16, 17, 35, 36 zu Null abgebaut (Schritt 57).

Bei der Abfrage in Schritt 57, wird beispielsgemäß ein Anfahrvorgang nur dann erkannt, wenn die abgefragten, oben genannten Bedingungen (*Ṁ*≥*Ṁ*₀ und*Ṅ*≤-*Ṅ*₀) während einer vorgegebenen Zeitdauer bzw. während einer vorgegebenen Anzahl von Abfragezyklen ununterbrochen erfüllt ist. Dadurch können fehlerhafte Anfahrvorgangserkennungen weiter vermieden werden.

Weiterhin können in Abwandlung zum dargestellten, bevorzugten Ausführungsbeispiel bei der Abfrage des Anfahrvorgangs zusätzliche Größen, wie die Motordrehzahl, das Motormoment oder die Fahrpedalstellung berücksichtigt werden.

Die zeitlichen Ableitungen *Ṁ* und *Ṅ*des Motormomentes M und der Motordrehzahl N werden in der Steuereinrichtung 23 berechnet. Hierfür wird zunächst sowohl der Wert des Motormomentes M als auch der Wert der Motordrehzahl N gefiltert, um Fehler in den zeitlichen Ableitungen zu verringern. Die Filterung erfolgt beispielsgemäß mittels des an sich bekannten "Moving-Average-Verfahrens", wobei anhand der jeweils vier bis sieben letzten Werte eine gewichtete Mittelwertbildung erfolgt. Dadurch wird eine Art Tiefpassfilterung erzielt und Schwankungen ausgeglichen. Erst anschließend werden mittels numerischer Differenziation die zeitlichen Ableitungen in der Steuereinrichtung 23 berechnet.

Wurde im Schritt 56 kein Anfahrvorgang erkannt, dann wird im nächsten Schritt 58 überprüft, ob die Verzögerungsdauer bereits abgelaufen ist. Hierfür wird der Zeitzähler T_{z} mit dem vorgegebenen Wert der Verzögerungsdauer Δt verglichen. Ist der Zeitzähler T_{z} kleiner als die Verzögerungsdauer Δt wird zum vorhergehenden Schritt 56 zurückgesprungen. Andernfalls ist die Verzögerungsdauer Δt seit der Zurücknahme des Bremspedals abgelaufen und der Haltebremsdruck p_{H} wird derart reduziert, dass ein Zurückrollen des Fahrzeugs entgegen der vorgesehenen Anfahrrichtung erfolgt. Dabei wird die Geschwindigkeit des Fahrzeugs auf eine Kriechgeschwindigkeit vₖ begrenzt.

Im Schritt 59 wird dazu ein Kriechbremsdruck p_{K} eingestellt. Dieser kann entweder so gesteuert oder geregelt werden, dass das Fahrzeug genau mit der gewünschten Kriechgeschwindigkeit v_{K} bergab rollt. Es ist alternativ auch möglich den Kriechbremsdruck um eine vorgegebene Druckdifferenz Δp niedriger einzusteuern oder einzuregeln als den Haltebremsdruck p_{H}. Die Druckdifferenz Δp kann dabei fest vorgegeben oder in Abhängigkeit der Steilheit der Steigung bestimmt werden. Beispielsweise ist es möglich, die Druckdifferenz Δp um so geringer zu wählen, je größer der Betrag des Steigungswertes s ist.

Das kontrollierte Zurückrollen des Fahrzeugs im Anfahrhilfemodus erlaubt dem Fahrer komfortable Einpark- oder Rangiermanöver am Berg.

In Abwandlung des dargestellten Ausführungsbeispiels ist es auch möglich den Kriechbremsdruck p_{K} dann einzustellen, wenn das Fahrzeug aus dem erkannten Stillstand heraus entgegen der vorgesehenen Anfahrrichtung zu rollen beginnt. Das Rollen und die Rollrichtung kann anhand der Raddrehzahlsensoren 43 bestimmt werden. Bei heutigen Raddrehzahlsensoren 43 kann schon nach wenigen Flankenverläufen des Raddrehzahlsignals die Drehrichtung erkannt werden. Bei dieser Alternative der erfindungsgemäßen Verfahrens kann somit auf den Neigungssensor im Fahrzeug verzichtet werden.

Nach dem Einstellen des Kriechbremsdruckes p_{K} wird im Schritt 60 analog zu Schritt 56 überprüft, ob ein Anfahrwunsch des Fahrers vorliegt und im positiven Fall der Bremsdruck p in den Radbremseinrichtungen 16, 17 35, 36 vollständig abgebaut (Schritt 57). Andernfalls wird die Abfrage in diesem Schritt 60 zyklisch wiederholt.

Fig. 3 zeigt fünf einzelne Diagramme, wobei die Abszisse jeweils die Zeitachse darstellt. Im obersten Diagramm ist das Bremslichtsignal BLS aufgetragen. Darunter sind die Fahrzeuggeschwindigkeit v, der Steigungswert s in Fahrzeuglängsrichtung der Bremsdruck p in den Radbremseinrichtungen 16, 17, 35, 36 und die zeitliche Ableitung *Ṁ* des Motormomentes M sowie die zeitliche Ableitung *Ṅ* der Motordrehzahl N dargestellt.

Zum Zeitpunkt t₀ betätigt der Fahrer das Bremspedal 6 und stellt einen bestimmten Bremsdruck p ein, der beispielsgemäß dem Haltebremsdruck p_{H} entspricht. Das Bremslichtsignal BLS hat zum Zeitpunkt t₀ eine ansteigende Flanke. Die Fahrzeuggeschwindigkeit v nimmt ab dem Zeitpunkt t₀ ab und zum Zeitpunkt t₁ ist die Fahrzeuggeschwindigkeit v in etwa Null, so dass sich das Fahrzeug im Stillstand befindet.

Zu diesem Zeitpunkt t₁ steht das Fahrzeug an einer Steigung mit einem Steigungswert s, der betragsmäßig größer ist als der Steigungsschwellenwert S₀. Es sei angenommen, dass der über die gewählte Gangstufe bestimmte Anfahrrichtung in Richtung bergauf verläuft, so dass der Anfahrhilfemodus zum Zeitpunkt t₁ aktiviert wird.

In Fig. 3 ist zu erkennen, dass der Fahrer ab dem Zeitpunkt t₂ das Bremspedal 6 vollständig in seine Ruhestellung zurückgenommen hat, so dass das Bremslichtsignal BLS eine abfallende Flanke aufweist und den Wert Null annimmt. Während der Verzögerungsdauer Δt bleibt der Haltebremsdruck p_{H} in den Radbremseinrichtungen 16, 17, 35, 36 unverändert. Dies würde dem Fahrer genügend Zeit geben einen Anfahrvorgang mit einem ausreichenden Motormoment M einzustellen und ohne zurückzurollen anzufahren.

Bei dem in Fig. 3 dargestellten Beispiel will der Fahrer jedoch das Fahrzeug bergab zurückrollen lassen. Nach dem Ablauf der Verzögerungsdauer Δt zum Zeitpunkt t₂+Δt wird der Bremsdruck p gemäß einem beliebig vorgebbaren Bremsdruckgradienten auf den Kriechbremsdruck p_{K} reduziert, so dass sich das Fahrzeug mit der Kriechgeschwindigkeit v_{K} bergab entgegen der vorgesehenen Anfahrrichtung bewegt.-Zum Zeitpunkt t₃ entspricht der Bremsdruck p dem Kriechbremsdruck p_{K} und die Fahrzeuggeschwindigkeit v hat die Kriechgeschwindigkeit vₖ angenommen.

Zum Zeitpunkt t₄ wird ein Anfahrvorgang erkannt: die zeitliche Ableitung *Ṁ* des Motormomentes M erreicht bzw. übersteigt den positiven Motormomentänderungsschwellenwert *Ṁ*₀, wobei zu diesem Zeitpunkt die zeitliche Ableitung *Ṅ* der Motordrehzahl N kleiner ist als der negative Motordrehzahländerungsschwellenwert -*Ṅ*₀. Der Bremsdruck p wird abgebaut und die Fahrzeuggeschwindigkeit v in Fahrtrichtung bergauf nimmt zu.

## Patentansprüche

1. Verfahren zur Ansteuerung wenigstens einer Radbremseinrichtung eines Fahrzeugs zur Vermeidung eines unbeabsichtigten Wegrollens bei stillstehendem Fahrzeug, wobei ein Anfahrhilfemodus mit einem vorgegebenen Bremsdruckverlauf in der wenigstens einen Radbremseinrichtung aktiviert wird, wenn
- der Stillstand des Fahrzeugs festgestellt wurde und das Fahrzeug in Fahrzeuglängsrichtung gesehen an einer Steigung steht und die vorgesehene Anfahrrichtung des Fahrzeugs in Richtung bergauf festgestellt wurde oder
- das Fahrzeug aus dem festgestellten Stillstand entgegen der vorgesehenen Anfahrrichtung zu rollen beginnt.
**dadurch gekennzeichnet,**
**dass** der zum Zeitpunkt des Einschaltens des Anfahrhilfemodus' durch die Bremspedalstellung vorgegebene Haltebremsdruck (p_{H}) für eine vorgegebene Verzögerungsdauer (Δt) nach der vollständigen Zurücknahme des Bremspedals aufrechterhalten bleibt, solange kein Anfahrwunsch des Fahrers erkannt wurde, wobei der Anfahrwunsch des Fahrers **dadurch** erkannt wird, dass die zeitliche Ableitung (*Ṁ*) des Motormoments (M) größer oder gleich einem vorgebbaren Motormomentänderungsschwellenwert (*Ṁ*₀) ist und gleichzeitig die zeitliche Ableitung (*Ṅ*) der Motordrehzahl (N) kleiner oder gleich einem vorgebbaren negativen Motordrehzahländerungsschwellenwert (-*Ṅ*₀) ist.

2. Verfahren nach Anspruch 1,
**dadurch gekennzeichnet,**
**dass** die Werte des Motormoments (M) und/oder der Motordrehzahl (N) vor der zeitlichen Ableitung insbesondere mittels des polynomialen Moving-Average-Verfahrens vorgefiltert werden.

3. Verfahren nach Anspruch 1 oder 2,
**dadurch gekennzeichnet,**
**dass** bei festgestelltem Beginn des Rollens des Fahrzeugs entgegen der vorgesehenen Anfahrrichtung selbsttätig ein Kriechbremsdruck (p_{K}) eingestellt wird.

4. Verfahren nach einem der Ansprüche 1 bis 3,
**dadurch gekennzeichnet,**
**dass** nach Ablauf der Verzögerungsdauer (Δt) der Haltebremsdruck (p_{H}) selbsttätig auf einen Kriechbremsdruck (p_{K}) reduziert wird.

5. Verfahren nach Anspruch 4,
**dadurch gekennzeichnet,**
**dass** der Kriechbremsdruck (p_{K}) um eine vorgebbare Druckdifferenz (Δp) niedriger als der Haltebremsdruck (p_{H}) eingestellt wird.

6. Verfahren nach Anspruch 4 oder 5,
**dadurch gekennzeichnet,**
**dass** der Kriechbremsdruck (p_{K}) derart eingestellt wird,
**dass** das Fahrzeug mit einer vorgebbaren Kriechgeschwindigkeit (v_{K}) bergab rollt.

7. Verfahren nach einem der Ansprüche 1 bis 6,
**dadurch gekennzeichnet,**
**dass** die vorgesehene Anfahrrichtung anhand der vom Fahrer eingelegten Gangstufe ermittelt wird.

8. Vorrichtung zu Durchführung des Verfahrens nach einem der Ansprüche 1 bis 7, mit einer Steuereinrichtung (23) zur Steuerung des Bremsdrucks (p) in wenigstens einer Radbremseinrichtung (16, 17, 35, 36) eines Fahrzeugs, wobei
- Mittel (43) zur Bestimmung der Fahrzeuggeschwindigkeit,
- Mittel (30) zur Bestimmung der Steigung der Straße in Fahrzeuglängsrichtung und
- Mittel zur Bestimmung der vorgesehenen Anfahrrichtung des Fahrzeugs vorgesehen sind, wobei mittels der Steuereinrichtung (23) ein Anfahrhilfemodus mit einem vorgegebenen Bremsdruckverlauf in der wenigstens einen Radbremseinrichtung (16, 17, 35, 36) aktiviert wird, wenn der
- der Stillstand des Fahrzeugs festgestellt wurde und
- das Fahrzeug in Fahrzeuglängsrichtung gesehen an einer Steigung steht und
- die vorgesehene Anfahrrichtung des Fahrzeugs in Richtung bergauf festgestellt wurde.
**dadurch gekennzeichnet,**
**dass** der zum Zeitpunkt des Einschaltens des Anfahrhilfemodus durch die Bremspedalstellung vorgegebene Haltebremsdruck (p_{H}) für eine vorgegebene Vgrzögerungsdauer (Δt) nach der vollständigen Zurücknahme des Bremspedals aufrechterhalten bleibt, solange kein Anfahrwunsch des Fahrers erkannt wurde, wobei der Anfahrwunsch des Fahrers **dadurch** erkannt wird, dass die zeitliche Ableitung (*Ṁ*) des Motormoments (M) größer oder gleich einem vorgebbaren Motormomentänderungsschwellenwert (*Ṁ*_{*0*}) ist und gleichzeitig die zeitliche Ableitung (*Ṅ*) der Motordrehzahl (N) kleiner oder gleich einem vorgebbaren negativen Motordrehzahländerungsschwellenwert (-*Ṅ*₀) ist.

9. Vorrichtung nach Anspruch 8,
**dadurch gekennzeichnet,**
**dass** Mittel zur Bestimmung der vom Fahrer eingelegten Gangstufe vorhanden sind, um die vorgesehen Anfahrrichtung zu bestimmen.

## Claims

1. Method for actuating at least one wheel brake device of a vehicle for preventing inadvertent rolling when a vehicle is stationary, wherein a driving off assistance mode with a predefined brake pressure profile is activated in the at least one wheel brake device if
- the stationary state of the vehicle has been detected and the vehicle is located on an incline, when viewed in the longitudinal direction of the vehicle, and an uphill direction was detected as the designated driving off direction of the vehicle, or
- the vehicle begins to roll starting from the detected stationary state, in the opposite direction to the designated driving off direction,
**characterized in that** the maintaining brake pressure (P_{H}) which is predefined at the time when the driving off assistance mode which is predefined by the brake pedal position is switched on is maintained for a predefined delay period (Δt) after the complete release of the brake pedal for as long as a driving off request of the driver has not been detected, wherein the driving off request of the driver is detected by virtue of the fact that the derivative (*Ṁ*) of the engine torque (M) over time is greater than or equal to a predefinable threshold value (*Ṁ*₀) for the change in the engine torque and at the same the derivative (*Ṅ*) of the engine speed (N) over time is less than or equal to a predefinable negative threshold value (-*Ṅ*₀) for the change in the engine speed.

2. Method according to Claim 1, **characterized in that** the values of the engine torque (M) and/or of the engine speed (N) are prefiltered before the derivation over time, in particular by means of the polynomial moving average method.

3. Method according to Claim 1 or 2, **characterized in that** when the start of rolling of the vehicle in the opposite direction to the designated driving off direction is detected a crawling brake pressure (p_{K}) is automatically set.

4. Method according to one of Claims 1 to 3, **characterized in that**, after the expiry of the delay period (Δt), the maintaining brake pressure (p_{H}) is automatically reduced to a crawling brake pressure (p_{K}).

5. Method according to Claim 4, **characterized in that** the crawling brake pressure (p_{K}) is set lower than the maintaining brake pressure (p_{H}) by an amount equal to a predefinable pressure difference (Δp).

6. Method according to Claim 4 or 5, **characterized in that** the crawling brake pressure (p_{K}) is set in such a way that the vehicle rolls downhill with a predefinable crawling speed (v_{K}).

7. Method according to one of Claims 1 to 6, **characterized in that** the designated driving off direction is determined by reference to the gear speed selected by the driver.

8. Device for carrying out the method according to one of Claims 1 to 7, having a control device (23) for controlling the brake pressure (p) in at least one wheel brake device (16, 17, 35, 36) of a vehicle, wherein
- means (43) for determining the vehicle speed,
- means (30) for determining the incline of the road in the longitudinal direction of the vehicle, and
- means for determining the designated driving off direction of the vehicle,
are provided, wherein a driving off assistance mode with a predefined brake pressure profile is activated in the at least one wheel brake device (16, 17, 35, 36) by means of the control device (23) if
- the stationary state of the vehicle has been detected and
- the vehicle is located on an incline, when viewed in the longitudinal direction of the vehicle, and
- an uphill direction was detected as the designated driving off direction of the vehicle,
**characterized in that** the maintaining brake pressure (p_{H}) which is predefined at the time when the driving off assistance mode which is predefined by the brake pedal position is switched on is maintained for a predefined delay period (Δt) after the complete release of the brake pedal for as long as a driving off request of the driver has not been detected, wherein the driving off request of the driver is detected by virtue of the fact that the derivative (*Ṁ*) of the engine torque (M) over time is greater than or equal to a predefinable threshold value (*Ṁ*₀) for the change in the engine torque and at the same the derivative (*Ṅ*) of the engine speed (N) over time is less than or equal to a predefinable negative threshold value (-*Ṅ*₀) for the change in the engine speed.

9. Device according to Claim 8, **characterized in that** means for determining the gear speed selected by the driver are present in order to determine the designated driving off direction.

## Revendications

1. Procédé pour commander au moins un équipement de freinage de roue d'un véhicule destiné à éviter un roulage involontaire lorsque le véhicule est immobilisé, un mode d'aide au démarrage avec une courbe de pression de freinage prédéfinie étant activé dans l'au moins un équipement de freinage de roue lorsque
- l'immobilisation du véhicule a été constatée et le véhicule, vu dans le sens longitudinal du véhicule, se trouve dans une pente et le sens de démarrage prévu du véhicule a été fixé dans le sens de la montée ou
- le véhicule commence à rouler depuis l'immobilisation constatée en sens inverse du démarrage prévu,
**caractérisé en ce**
**qu'**au moment de l'activation du mode d'aide au démarrage, la pression de freinage de retenue (p_{H}) prédéfinie par la position de la pédale de frein est conservée pendant un temps de retard (Δt) prédéfini après le relâchement complet de la pédale de frein tant qu'aucun souhait de démarrage du conducteur n'a été détecté, le souhait de démarrage du conducteur étant détecté par le fait que la dérivée dans le temps (M) du couple du moteur (M) est supérieure ou égale à une valeur de seuil de modification du couple du moteur (*M*₀) pouvant être prédéfinie et, simultanément, la dérivée dans le temps (*N*) de la vitesse de rotation du moteur (N) est inférieure ou égale à une valeur de seuil de modification de la vitesse de rotation du moteur (-*N*₀) négative pouvant être prédéfinie.

2. Procédé selon la revendication 1, **caractérisé en ce que** les valeurs du couple du moteur (M) et/ou de la vitesse de rotation du moteur (N) sont préfiltrées avant la dérivée dans le temps, notamment au moyen du procédé de la moyenne mobile polynomiale.

3. Procédé selon la revendication 1 ou 2, **caractérisé en ce qu'**une pression de freinage d'avance lente (p_{K}) est établie automatiquement lors du début détecté du roulage du véhicule en sens inverse du démarrage prévu.

4. Procédé selon l'une des revendications 1 à 3, **caractérisé en ce que** la pression de freinage de retenue (p_{H}) est automatiquement réduite à la pression de freinage d'avance lente (p_{K}) après écoulement du temps de retard (Δt).

5. Procédé selon la revendication 4, **caractérisé en ce que** la pression de freinage d'avance lente (p_{K}) est réglée inférieure à la pression de freinage de retenue (p_{H}) d'une différence de pression (Δp) pouvant être prédéfinie.

6. Procédé selon la revendication 4 ou 5, **caractérisé en ce que** la pression de freinage d'avance lente (p_{K}) est réglée de telle sorte que le véhicule descend la pente avec une vitesse d'avance lente (v_{K}) pouvant être prédéfinie.

7. Procédé selon l'une des revendications 1 à 6, **caractérisé en ce que** le sens de démarrage prévu est déterminé au moyen du rapport engagé par le conducteur.

8. Dispositif pour mettre en oeuvre le procédé selon l'une des revendications 1 à 7, comprenant un dispositif de commande (23) pour commander la pression de freinage (p) dans au moins un dispositif de freinage de roue (16, 17, 35, 36) d'un véhicule,
- des moyens (43) de détermination de la vitesse du véhicule,
- des moyens (30) de détermination de la pente de la chaussée dans le sens longitudinal du véhicule et
- des moyens pour déterminer le sens de démarrage prévu du véhicule
étant prévus, un mode d'aide au démarrage avec une courbe de pression de freinage prédéfinie étant activé dans l'au moins un dispositif de freinage de roue (16, 17, 35, 36) au moyen du dispositif de commande (23) lorsque
- l'immobilité du véhicule a été constatée et
- le véhicule, vu dans le sens longitudinal du véhicule, se trouve dans une pente et
- le sens de démarrage prévu du véhicule a été fixé dans le sens de la montée,
**caractérisé en ce**
**qu'**au moment de l'activation du mode d'aide au démarrage, la pression de freinage de retenue (p_{H}) prédéfinie par la position de la pédale de frein est conservée pendant un temps de retard (Δt) prédéfini après le relâchement complet de la pédale de frein tant qu'aucun souhait de démarrage du conducteur n'a été détecté, le souhait de démarrage du conducteur étant détecté par le fait que la dérivée dans le temps (*M*) du couple du moteur (M) est supérieure ou égale à une valeur de seuil de modification du couple du moteur (*M*₀) pouvant être prédéfinie et, simultanément, la dérivée dans le temps (*N*) de la vitesse de rotation du moteur (N) est inférieure ou égale à une valeur de seuil de modification de la vitesse de rotation du moteur (-*N*₀) négative pouvant être prédéfinie.

9. Dispositif selon la revendication 8, **caractérisé en ce qu'**il existe des moyens pour déterminer le rapport engagé par le conducteur afin de déterminer le sens de démarrage prévu.
